# EUROPEAN PATENT APPLICATION

(11) **EP 1 094 086 A1**
(43) Date of publication of application: **25.04.2001**
(21) Application number: 00123003.6
(22) Date of filing: 23.10.2000
(51) Int. Cl.: C08F 293/00, C09J 153/00, C09J 201/00, C09J 133/06

(54) **Acrylic block copolymer and its use and production process**

(30) Priority: 23.10.1999 US 425871
(71) Applicant: Nippon Shokubai Co., Ltd., Osaka-shi, Osaka 541-0043 (JP)
(72) Inventor: Kobayashi, Nobuhiro, Toyonaka-shi, Osaka 560-0001 (JP); Yoshida, Masatoshi, Nara-shi, Nara 631-0036 (JP)
(74) Representative: Henkel, Feiler, Hänzel

(57) **Abstract**

The present invention provides an acrylic block copolymer and its use and production process, wherein the acrylic block copolymer exhibits high heat resistance despite having a low viscosity. The acrylic block copolymer comprises a (meth)acrylic ester structural unit as an essential component in a ratio of 50 to 100 weight % of the entirety of the acrylic block copolymer and has a holding power of not less than 100 minutes as specifically determined. This acrylic block copolymer is fit for hot-melt pressure sensitive adhesives. In a production process for this acrylic block copolymer, the second radical polymerization step among the elementary steps of the multistep radical polymerization includes the step of uniformly mixing a polymer solution, resultant from the first radical polymerization step, with a polymerizable monomer which is to be used in the second radical polymerization step.

## Description

### BACKGROUND OF THE INVENTION

### A. TECHNICAL FIELD

The present invention relates to a new acrylic block copolymer and its use and production process, wherein the acrylic block copolymer exhibits high heat resistance despite having a low viscosity.

### B. BACKGROUND ART

As to acrylic block copolymer, there is a known star-shaped block copolymer that has a structure in which at least three polymer chains are radially extended from a central polyvalent mercaptan segment wherein the central polyvalent mercaptan segment is a residual portion resultant from dissociation of protons from mercapto groups of a polyvalent mercaptan. This star-shaped block copolymer generally has more excellent heat resistance than simple chain polymers. Herein, the heat resistance means the cohesion or strength of polymers at high temperature, for example, the holding power at high temperature in the field of pressure sensitive adhesives. The increase of the molecular weight is an effective method to enhance the heat resistance. In the case of the simple chain polymers, however, the simple increase of the molecular weight leads to great increase of viscosity and therefore causes problems of workability. In comparison, because of the above structure, the star-shaped block copolymer can have its heat resistance enhanced without so much increase of its viscosity. Thus, the star-shaped block copolymer is favorably used for purposes to which the heat resistance is demanded, such as hot-melt pressure sensitive adhesives.

The star-shaped block copolymer is generally synthesized by a process comprising the multistep radical polymerization which involves the use of a polyvalent mercaptan having a valence of 2 to 6 as an initiator wherein the elementary steps of the multistep radical polymerization differ in polymerizable monomers as used therein (JP-A-07-179538).

However, also as to the star-shaped block copolymer, in the case where higher heat resistance is demanded thereto, the above method involving the increase of the molecular weight might enhance the heat resistance in some degree, but the increase of the viscosity would be still so great that problems of workability would occur.

Thus, the present applicant diligently studied and variously devised: what the star-shaped structure of the star-shaped block copolymer should be for the purpose of causing the star-shaped block copolymer to exhibit high heat resistance without increasing its molecular weight; and processes for realizing it. As a result, the applicant found that if polymers having star-shaped structures get bonded to each other, it is possible to make them exhibit high heat resistance even without increasing their molecular weights, and further, the applicant experimentally confirmed that if at least one of the elementary steps of the multistep radical polymerization involves the joint use of a trace of polyfunctional monomer with the polymerizable monomer, the above linkage structure is easily and surely obtainable. Thus, the applicant made an earlier application for a patent on such a star-shaped block copolymer having such a linkage structure and its production process (JP-A-10-287721).

### SUMMARY OF THE INVENTION

### A. OBJECT OF THE INVENTION

An object of the present invention is to provide an acrylic block copolymer and its use and production process, wherein the acrylic block copolymer exhibits still higher heat resistance than the star-shaped block copolymer according to the above earlier patent application.

### B. DISCLOSURE OF THE INVENTION

The present inventors completed the present invention by finding that the above problems can be solved by making the below-mentioned improvements upon the aforementioned process on which the present applicant made an earlier application for a patent.

An acrylic block copolymer, according to the present invention, comprises a (meth)acrylic ester structural unit as an essential component in a ratio of 50 to 100 weight % of the entirety of the acrylic block copolymer and has a holding power of not less than 100 minutes,
wherein the holding power is determined by a process including the steps of: preparing a sample by melt-coating a hot-melt pressure sensitive adhesive in a thickness of 25 µm onto a 38-µm-thick PET film, wherein the hot-melt pressure sensitive adhesive includes the acrylic block copolymer; and then attaching the sample onto a stainless steel sheet such that the adhesion area would be 1.27 cm × 1.27 cm; and then pressing the sample onto the stainless steel sheet by once running a 2-kg-heavy roller thereon back and forth; and then adjusting the temperature of the product to 60 °C for 30 minutes; and then applying a load of 1 kg to the sample; and then measuring how long the sample has not fallen off from the stainless steel sheet since the application of the load.

A hot-melt pressure sensitive adhesive, according to the present invention, comprises an acrylic block copolymer as an essential component, wherein the acrylic block copolymer includes a (meth)acrylic ester structural unit as an essential component in a ratio of 50 to 100 weight % of the entirety of the acrylic block copolymer and has a holding power of not less than 100 minutes,
wherein the holding power is determined by a process including the steps of: preparing a sample by melt-coating a hot-melt pressure sensitive adhesive in a thickness of 25 µm onto a 38-µm-thick PET film, wherein the hot-melt pressure sensitive adhesive includes the acrylic block copolymer; and then attaching the sample onto a stainless steel sheet such that the adhesion area would be 1.27 cm × 1.27 cm; and then pressing the sample onto the stainless steel sheet by once running a 2-kg-heavy roller thereon back and forth; and then adjusting the temperature of the product to 60 °C for 30 minutes; and then applying a load of 1 kg to the sample; and then measuring how long the sample has not fallen off from the stainless steel sheet since the application of the load.

A production process for an acrylic block copolymer, according to the present invention, comprises the multistep radical polymerization in the presence of a polyvalent mercaptan wherein the elementary steps of the multistep radical polymerization differ in polymerizable monomers as used therein, wherein at least one of the elementary steps of the multistep radical polymerization involves the joint use of a polyfunctional monomer with the polymerizable monomer, wherein:
the second radical polymerization step among the elementary steps of the multistep radical polymerization includes the steps of: all at once mixing a polymer solution, resultant from the first radical polymerization step, with a polymerizable monomer which is to be used in the second radical polymerization step; and then polymerizing the resultant mixture in the presence of the polyfunctional monomer; or
the second radical polymerization step among the elementary steps of the multistep radical polymerization includes the step of gradually adding a polymer solution, resultant from the first radical polymerization step, and a polymerizable monomer, which is to be used in the second radical polymerization step, to a vessel to mix them, while polymerizing the resultant mixture in the presence of the polyfunctional monomer.

These and other objects and the advantages of the present invention will be more fully apparent from the following detailed disclosure.

### BRIEF DESCRIPTION OF THE DRAWING

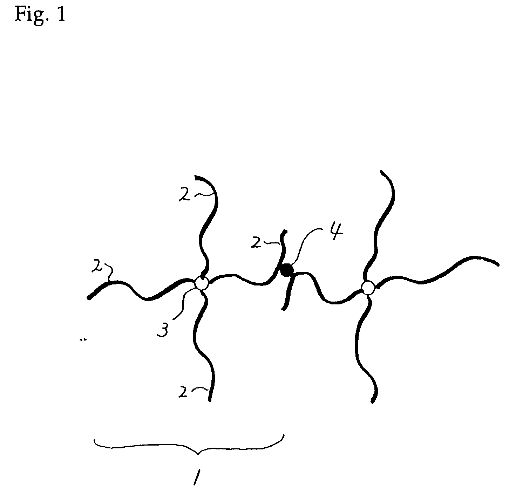

Fig. 1 is a diagram of a model of a star-shaped block copolymer as an acrylic block copolymer according to the present invention.

### DETAILED DESCRIPTION OF THE INVENTION

The acrylic block copolymer, according to the present invention, has a holding power of not less than 100 minutes, preferably not less than 300 minutes, more preferably not less than 500 minutes, most preferably not less than 1,000 minutes, as determined below. Therefore, this acrylic block copolymer does not only have high holding power, but also exhibits a viscosity that is not so high, and further exhibits extremely high heat resistance at high temperature. Accordingly, this copolymer is, for example, extremely useful to obtain a hot-melt pressure sensitive adhesive having high holding power.

Holding power (1): as determined by a process including the steps of: preparing a sample by melt-coating a hot-melt pressure sensitive adhesive in a thickness of 25 µm onto a 38-µm-thick PET film, wherein the hot-melt pressure sensitive adhesive includes the acrylic block copolymer; and then attaching the sample onto a stainless steel sheet such that the adhesion area would be 1.27 cm × 1.27 cm; and then pressing the sample onto the stainless steel sheet by once running a 2-kg-heavy roller thereon back and forth; and then adjusting the temperature of the product to 60 °C for 30 minutes; and then applying a load of 1 kg to the sample; and then measuring how long the sample has not fallen off from the stainless steel sheet since the application of the load.

The acrylic block copolymer, according to the present invention, is a copolymer which comprises a (meth)acrylic ester structural unit as an essential component in a ratio of 50 to 100 weight %, preferably 80 to 100 weight %, of the entirety of the acrylic block copolymer. The (meth)acrylic ester structural unit means a unit constituting the copolymer which unit is derived from a (meth)acrylic ester when its carbon-carbon double bond is opened and then assembled into the copolymer. Specific examples of the (meth)acrylic ester include the below-mentioned ones.

As is shown in Fig. 1, a preferable embodiment of the acrylic block copolymer according to the present invention is a star-shaped block copolymer comprising a plurality of star-shaped structures 1 (in Fig. 1, two star-shaped structures 1) in which at least three chain polymer segments 2 (in Fig. 1, four chain polymer segments 2) are radially extended from a central polyvalent mercaptan segment 3, wherein the plurality of star-shaped structures 1 are bonded to each other at their chain polymer segments 2, and wherein the central polyvalent mercaptan segment 3 is a residual portion resultant from dissociation of protons from mercapto groups of a polyvalent mercaptan. In Fig. 1, the portion where the two star-shaped structures 1, 1 are bonded to each other at their chain polymer segments 2 is marked with a dot, and this portion is a bonding structure 4 as derived from the below-mentioned polyfunctional monomer which is a bonding material.

As is mentioned below, the acrylic block copolymer according to the present invention is favorably usable for hot-melt pressure sensitive adhesives. However, this copolymer is, besides, similarly favorably usable for solvent type pressure sensitive adhesives or emulsion type pressure sensitive adhesives.

Although there is no especial limitation, the acrylic block copolymer according to the present invention is preferably produced by the production process according to the present invention for an acrylic block copolymer which process is the same as the aforementioned conventional production process for a star-shaped block copolymer as an acrylic block copolymer, comprising the multistep radical polymerization involving the use of the polyvalent mercaptan, except that the below-mentioned polyfunctional monomer is jointly used with the below-mentioned polymerizable monomer in at least one of the elementary steps of the multistep radical polymerization, and further that the below-mentioned special second radical polymerization step is involved.

In the production process according to the present invention for an acrylic block copolymer, radical polymerization of the first polymerizable monomer is carried out in the presence of the polyvalent mercaptan, when the radical polymerization of the first monomer is initiated with mercapto groups of the polyvalent mercaptan, so that the first monomer forms chain polymer segments of the star-shaped block copolymer as the acrylic block copolymer. In this step, some of the mercapto groups of the polyvalent mercaptan remain not initiating this radical polymerization. Thus, next, the second polymerizable monomer is added to carry out the second radical polymerization step, when the radical polymerization of the second monomer is initiated with the residual mercapto groups of the polyvalent mercaptan, so that the second monomer forms chain polymer segments, having compositions different from those of chain polymer segments resultant from the first step, into the star-shaped block.

In the production process according to the present invention for an acrylic block copolymer, the polyfunctional monomer is jointly used with the polymerizable monomer in at least one of the elementary steps of the multistep radical polymerization, therefore the star-shaped structures as obtained in the above way can be bonded to each other through the polyfunctional monomer, when there is also an expectable effect that homopolymers of the polymerizable monomers, which are by-products of the radical polymerization (chain polymers resultant from polymerization as not initiated with mercapto groups), are also bonded to chain polymer segments of the star-shaped block copolymer as the acrylic block copolymer through the polyfunctional monomer.

In the production process according to the present invention for an acrylic block copolymer, it is necessary that the second radical polymerization step among the elementary steps of the multistep radical polymerization includes the steps of: all at once mixing a polymer solution, resultant from the first radical polymerization step, with a polymerizable monomer which is to be used in the second radical polymerization step; and then polymerizing the resultant mixture, or that the second radical polymerization step among the elementary steps of the multistep radical polymerization includes the step of gradually adding a polymer solution, resultant from the first radical polymerization step, and a polymerizable monomer, which is to be used in the second radical polymerization step, to a vessel to mix them, while polymerizing the resultant mixture. If such a mixing method is carried out, the polymer solution resultant from the first radical polymerization step will be uniformly mixed with the polymerizable monomer which is to be used in the second radical polymerization step.

This second radical polymerization step needs to be carried out in the presence of the polyfunctional monomer. More specifically, it may be carried out as follows: the polymer solution resultant from the first radical polymerization step is uniformly mixed with the polymerizable monomer, which is to be used in the second radical polymerization step, and with the polyfunctional monomer, and then the polymerization is carried out in a polymerization vessel while the resultant mixture is dropwise added thereto; or the polymerization is carried out in a polymerization vessel while each of the polymer solution, resultant from the first radical polymerization step, the polymerizable monomer, which is to be used in the second radical polymerization step, and the polyfunctional monomer is uniformly dropwise added to the polymerization vessel.

During the above all-at-once mixing or addition mixing, it is preferable that the progress of the polymerization of the polymer solution resultant from the first radical polymerization step is terminated at a conversion of not less than 50 %, preferably not less than 70 %. Examples of methods to terminate the polymerization include methods in which a polymerization inhibitor is added to the polymer solution resultant from the first radical polymerization step, or the temperature of the polymer solution is lowered.

Examples of the above polymerization inhibitor, as used to terminate the polymerization, include: phenols such as hydroquinone, 2,5-bis(1,1,3,3-tetramethylbutyl)hydroquinone, 2,5-bis(1,1-dimethylbutyl)hydroquinone, methoxyphenol, 6-tertiary-butyl-2,4-xylenol, and 3,5-di-tertiary-butylcatechol; N-nitrosophenylhydroxylamine aluminum salt, and phenothiazine. These may be used either alone respectively or in combinations with each other. The amount of the polymerization inhibitor, as used, is usually in the range of 1 to 10,000 weight ppm, preferably 10 to 1,000 weight ppm, more preferably 20 to 200 weight ppm, of the polymerizable monomer as used in the first radical polymerization step. In the case where the amount of the polymerization inhibitor, as used, is smaller than 1 weight ppm, it might be impossible to efficiently terminate the polymerization. On the other hand, in the case where the amount of the polymerization inhibitor, as used, is larger than 10,000 weight ppm, the polymerization in the second radical polymerization step might not be initiated.

The polymerization in the first radical polymerization step can substantially be terminated if the temperature of the polymer solution is lowered to not higher than 40 °C. The reason therefor is that the decomposition rate of the polymerization initiator depends on the temperature, therefore it is considered that almost no radical forms if the temperature of the polymer solution falls down to not higher than 40 °C. The depression of the temperature of the polymer solution to not higher than 20 °C is enough to more surely terminate the polymerization.

The above polymerization process by which the present invention is featured, namely, the process comprising the steps of mixing the polymer solution, resultant from the first radical polymerization step, with the polymerizable monomer, which is to be used in the second radical polymerization step, and then polymerizing the resultant mixture in the second radical polymerization step, can give a higher functional star-shaped block copolymer as the acrylic block copolymer than conventional polymerization processes comprising the step of adding in sequence the polymerizable monomer, which is to be used in the second radical polymerization step, to the entire polymer solution resultant from the first radical polymerization step. The reason why the high functional star-shaped block copolymer is obtainable by this new polymerization process is not certain, but is inferred to be that the polymerization process by which the present invention is featured enhances the ratio of formation of the star-shaped block copolymer as shown in Fig. 1.

Hereinafter, a detailed explanation is given about raw materials used for the production process according to the present invention for an acrylic block copolymer.

The polymerizable monomer, as used in the present invention, comprises a (meth)acrylic ester as an essential component in a ratio of 50 to 100 weight % of the entirety of the polymerizable monomer. Examples of the (meth)acrylic ester include alkyl (meth)acrylates having 1 to 30 carbon atoms, hydroxyethyl (meth)acrylate, hydroxypropyl (meth)acrylate, glycidyl (meth)acrylate, methoxyethyl (meth)acrylate, ethoxyethyl (meth)acrylate, and ethoxyethoxyethyl (meth)acrylate. These may be used either alone respectively or in combinations with each other.

As to the polymerizable monomer, any other polymerizable monomer is usable jointly with the (meth)acrylic ester if it is to form a homopolymer or copolymer by radical polymerization. Examples of the above other polymerizable monomer include: (meth)acrylamides, typically, such as (meth)acrylamide, N-methyl(meth)acrylamide, and N-propyl(meth)acrylamide; (meth)acrylic acid; styrenic monomers, typically, such as α-methylstyrene, vinyltoluene, and styrene; maleimide monomers, typically, such as phenylmaleimide and cyclohexylmaleimide; vinyl ether monomers, typically, such as methyl vinyl ether, ethyl vinyl ether, and isobutyl vinyl ether; fumaric acid, monoalkyl fumarates, dialkyl fumarates; maleic acid, monoalkyl maleates, dialkyl maleates; itaconic acid, monoalkyl itaconates, dialkyl itaconates; (meth)acrylonitrile, butadiene, isoprene, vinyl chloride, vinylidene chloride, vinyl acetate, vinyl ketones, vinylpyridine, vinylpyrrolidone, and vinylcarbazole. These may be used either alone respectively or in combinations with each other. The above other polymerizable monomer is usable in a ratio less than 50 weight % of the entirety of the polymerizable monomer.

In the production process according to the present invention, the multistep radical polymerization is carried out in the presence of a polyvalent mercaptan wherein the elementary steps of the multistep radical polymerization differ in polymerizable monomers as used therein. Herein, the different polymerizable monomers mean not only polymerizable monomers having different chemical structures, but also combinations of polymerizable monomers having the same chemical structure, but different mixing ratios. Examples of the mode, in which the elementary steps of the multistep radical polymerization differ in polymerizable monomers as used therein, include such that: a combination of polymerizable monomers comprising 90 weight parts of methyl methacrylate and 10 weight parts of butyl acrylate is used in the first radical polymerization step, while a combination of polymerizable monomers comprising 10 weight parts of methyl methacrylate and 90 weight parts of butyl acrylate is used in the second radical polymerization step. This example of the above mode provides high performance in practical use, because there is a great difference between Tg of chain polymer segments of the resultant copolymer.

Examples of the polyvalent mercaptan, as used in the present invention, include: diesters as formed from diols (e.g. ethylene glycol and 1,4-butanediol) and carboxyl-group-containing mercaptans, such as ethylene glycol dithioglycolate, ethylene glycol dithiopropionate, 1,4-butanediol dithioglycolate, and 1,4-butanediol dithiopropionate; triesters as formed from triols (e.g. trimethylolpropane) and carboxyl-group-containing mercaptans, such as trimethylolpropane trithioglycolate and trimethylolpropane trithiopropionate; polyesters as formed from compounds having four hydroxyl groups (e.g. pentaerythritol) and carboxyl-group-containing mercaptans, such as pentaerythritol tetrakisthioglycolate and pentaerythritol tetrakisthiopropionate; polyester compounds as formed from compounds having six hydroxyl groups (e.g. dipentaerythritol) and carboxyl-group-containing mercaptans, such as dipentaerythritol hexakisthioglycolate and dipentaerythritol hexakisthiopropionate; polyester compounds as formed from other compounds having at least three hydroxyl groups and carboxyl-group-containing mercaptans; compounds having at least three mercapto groups, such as trithioglycerol; triazine polythiols, such as 2-di-n-butylamino-4,6-dimercapto-S-triazine and 2,4,6-trimercapto-S-triazine; compounds as obtained by adding hydrogen sulfide to a plurality of epoxy groups of polyvalent epoxy compounds to thereby introduce a plurality of mercapto groups; ester compounds as obtained by esterifying a plurality of carboxyl groups of polyvalent carboxylic acids with mercaptoethanol. These may be used either alone respectively or in combinations with each other. Herein, the carboxyl-group-containing mercaptans are compounds having one mercapto group and one carboxyl group, such as thioglycolic acid, mercaptopropionic acid, and thiosalicylic acid.

The polyfunctional monomer, as used in the process according to the present invention, is a compound having at least two polymerizable unsaturated groups per molecule. A monomer of which the number of the polymerizable unsaturated groups per molecule is 2 is referred to as bifunctional monomer, and a monomer of which the number of the polymerizable unsaturated groups per molecule is 3 is referred to as trifunctional monomer. The polyfunctional monomer, as used in the present invention, needs to be the compound having at least two polymerizable unsaturated groups (i.e. bifunctional or more polyfunctional monomer) in view of bonding the block copolymers to each other, but it is generally preferable that the number of the polymerizable unsaturated groups is not too large, for example, the bi- or trifunctional monomer is preferably used, because compounds having at least four polymerizable unsaturated groups might be considered more preferable in view of increasing the number of the bonding structures to bond the block copolymers to each other, but because when the number of the polymerizable unsaturated groups is not smaller than 4, the resultant copolymer would form a network structure to easily become a gel during the polymerization.

Examples of the polyfunctional monomer, as used in the production process according to the present invention, include: diester compounds as formed from diols and (meth)acrylic acid, such as ethylene glycol di(meth)acrylate, polyethylene glycol di(meth)acrylate, propylene glycol di(meth)acrylate, polypropylene glycol di(meth)acrylate, 1,3-butylene glycol di(meth)acrylate, 1,6-hexanediol di(meth)acrylate, neopentyl glycol di(meth)acrylate, 2-hydroxy-1,3-di(meth)acryloxypropane, 2,2-bis[4-(acryloxyethoxy)phenyl]propane, 2,2-bis[4-(methacryloxyethoxy)phenyl]propane, 2,2-bis[4-(acryloxypolyethoxy)phenyl]propane, 2,2-bis[4-(methacryloxypolyethoxy)phenyl]propane, and 2-hydroxy-1-acryloxy-3-methacryloxypropane; polyester compounds as formed from compounds having at least three hydroxyl groups per molecule and (meth)acrylic acid, such as trimethylolpropane tri(meth)acrylate, tetramethylolmethane tri(meth)acrylate, tetramethylolmethane tetra(meth)acrylate, pentaerythritol tetrakis(meth)acrylate, and dipentaerythritol hexakis(meth)acrylate; allyl (meth)acrylate; and divinylbenzene. These may be used either alone respectively or in combinations with each other.

In the production process according to the present invention, the weight ratio of the polyfunctional monomer to the polyvalent mercaptan (weight of polyfunctional monomer/weight of polyvalent mercaptan) is preferably less than 2, more preferably in the range of 0.05 to 1 both inclusive. Because, in the case where this weight ratio is not less than 2, the number of polyfunctional monomer units as included per molecule of the block copolymer is so large that the resultant copolymer might form a network structure to become a gel during the polymerization.

In the production process according to the present invention, the weight ratio of the polyfunctional monomer to the polymerizable monomers (weight of polyfunctional monomer/total of polymerizable monomers) is preferably less than 0.05, more preferably in the range of 0.001 to 0.01, but not including 0.01. Because, in the case where this weight ratio is not less than 0.05, the viscosity during the production is high unfavorably for the productivity, and because, in the case where the above weight ratio is further increased, the resultant copolymer might form a network structure to become a gel during the polymerization. Herein, the total of the polymerizable monomers is the total of the weights of the polymerizable monomers as used in their respective elementary steps of the multistep radical polymerization.

In the production process according to the present invention, the radical polymerization may be carried out by conventional radical polymerization methods such as bulk polymerization, solution polymerization, suspension polymerization, and emulsion polymerization. The polymerization temperature is preferably in the range of 30 to 200 °C, more preferably 50 to 150 °C. Conventional radical polymerization initiators may be used for the polymerization, and examples thereof include: azo initiators such as 2,2'-azobisisobutyronitrile and 2,2'-azobis(2-methylbutyronitrile); and peroxide polymerization initiators such as benzoyl peroxide. The amount of the polymerization initiator as used is preferably not larger than 1/3, more preferably not larger than 1/5, in terms of weight ratio to the polyvalent mercaptan. Because, in the case where the polymerization initiator is used in an amount larger than the above ratio, not only the polymer segments which are extended from the polyvalent mercaptan segment, but also a large amount of polymers which are extended from the polymerization initiator are formed, with the result that the production efficiency of the block copolymer is easily lowered, and further that the properties of the resultant block copolymer were easily deteriorated.

Other raw materials, which might be used in the process according to the present invention, are not especially limited, but common raw materials which are used in conventional production processes for star-shaped block copolymers may be used without modification.

The hot-melt pressure sensitive adhesive, according to the present invention, comprises an acrylic block copolymer as an essential component, wherein the acrylic block copolymer includes a (meth)acrylic ester structural unit as an essential component in a ratio of 50 to 100 weight % of the entirety of the acrylic block copolymer. Herein, the below-determined holding power (2) of the hot-melt pressure sensitive adhesive comprising the acrylic block copolymer is not less than 100 minutes, preferably not less than 300 minutes, more preferably not less than 500 minutes, most preferably not less than 1,000 minutes.

Holding power (2): as determined by a process including the steps of: preparing a sample by melt-coating a hot-melt pressure sensitive adhesive in a thickness of 25 µm onto a 38-µm-thick PET film, wherein the hot-melt pressure sensitive adhesive includes the acrylic block copolymer; and then attaching the sample onto a stainless steel sheet such that the adhesion area would be 1.27 cm × 1.27 cm; and then pressing the sample onto the stainless steel sheet by once running a 2-kg-heavy roller thereon back and forth; and then adjusting the temperature of the product to 60 °C for 30 minutes; and then applying a load of 1 kg to the sample; and then measuring how long the sample has not fallen off from the stainless steel sheet since the application of the load.

The mixing ratio of the acrylic block copolymer in the hot-melt pressure sensitive adhesive according to the present invention is not especially limited, but is preferably in the range of 1 to 100 weight %, more preferably 10 to 100 weight %, still more preferably 20 to 100 weight %, most preferably 40 to 100 weight %, of the entirety of the hot-melt pressure sensitive adhesive. In the case where the mixing ratio is out of the above range, a hot-melt pressure sensitive adhesive which exhibits good heat resistance (at high temperature) despite having a low viscosity might not be obtainable.

Even if the hot-melt pressure sensitive adhesive according to the present invention comprises the acrylic block copolymer only, this hot-melt pressure sensitive adhesive exhibits sufficient performance as a hot-melt pressure sensitive adhesive, but may further comprise conventional tackifiers, waxes, and conventional pressure sensitive adhesives.

The tackifier serves to reduce the viscosity during the hot-melt operation and to enhance the cohesion during the use. Examples of the tackifier include rosin resins, terpene resins, aliphatic petroleum resins, aromatic petroleum resins, coumarone-indene resins, alkylphenol resins, and xylene resins. These may be used either alone respectively or in combinations with each other.

The amount of the tackifier which is used is, for example, in the range of 10 to 200 weight parts, preferably 10 to 100 weight parts, per 100 weight parts of the acrylic block copolymer. In the case where the amount of the tackifier is smaller than the above range, the viscosity might not be reduced or the cohesion might not be enhanced. On the other hand, in the case where the amount of the tackifier is larger than the above range, there is a possibility that, when the hot-melt pressure sensitive adhesive is used, the tack might be poor or the cohesion might be deficient.

The tackifier is, for example, combined into the hot-melt pressure sensitive adhesive by mixing the tackifier with the reaction mixture containing the acrylic block copolymer obtained by the above production process. The hot-melt pressure sensitive adhesive may be obtained by mixing the tackifier before or after the reaction mixture is devolatilized.

The wax is effective for reducing the viscosity during the hot-melt operation. Examples of the wax include natural wax, paraffin wax, polypropylene wax, polyethylene wax, and polymers of (meth)acrylates having saturated alkyl groups with not fewer than 18 carbon atoms. These may be used either alone respectively or in combinations with each other.

The amount of the wax which is used is, for example, in the range of 0.01 to 100 weight parts, preferably 0.1 to 10 weight parts, per 100 weight parts of the acrylic block copolymer. In the case where the amount of the wax is smaller than the above range, the viscosity might not be reduced. On the other hand, in the case where the amount of the wax is larger than the above range, the adhesion or the pressure sensitive adhesion tends to be deteriorated.

The wax is, for example, combined into the hot-melt pressure sensitive adhesive by mixing the wax with the reaction mixture containing the acrylic block copolymer obtained by the above production process. The hot-melt pressure sensitive adhesive may be obtained by mixing the wax before or after the reaction mixture is devolatilized.

### (Effects and Advantages of the Invention):

The new acrylic block copolymer, according to the present invention, can exhibit higher heat resistance even without increasing its molecular weight. Especially, if this acrylic block copolymer is a star-shaped block copolymer, it has a structure in which star-shaped structures are bonded to each other at their chain polymer segments, therefore this copolymer can exhibit still higher heat resistance even without increasing its molecular weight.

The hot-melt pressure sensitive adhesive, according to the present invention, can exhibit still higher heat resistance, because this hot-melt pressure sensitive adhesive comprises the above acrylic block copolymer according to the present invention as an essential component.

Because the production process for an acrylic block copolymer, according to the present invention, involves the joint use of a polyfunctional monomer with a polymerizable monomer as monomers in a polymerization reaction, this process can bond the resultant star-shaped structures to each other through the polyfunctional monomer, thereby easily and surely giving the star-shaped block copolymer as the above new acrylic block copolymer according to the present invention. Furthermore, during the polymerization in this process, a polymer solution resultant from the first radical polymerization step is mixed with a polymerizable monomer which is to be used in the second radical polymerization step, thus carrying out the second radical polymerization step in the presence of the polyfunctional monomer. Therefore, this process can easily and surely give the star-shaped block copolymer as the acrylic block copolymer wherein the star-shaped block copolymer exhibits high heat resistance at high temperature.

### DETAILED DESCRIPTION OF THE PREFERRED EMBODIMENTS

Hereinafter, the present invention is more specifically illustrated by the following examples of some preferred embodiments in comparison with comparative examples not according to the invention. However, the invention is not limited to the below-mentioned examples.

Hereinafter, unless otherwise noted, the units "%" and "part(s)" are by weight. Incidentally, the number-average molecular weight (Mn) and the weight-average molecular weight (Mw) were determined in terms of polystyrene by gel permeation chromatography (GPC).

The properties of the hot-melt pressure sensitive adhesive were measured in the following way.
Sample: as prepared by melt-coating the hot-melt pressure sensitive adhesive in a thickness of 25 µm onto a 38-µm-thick PET film with a GPD coater (made by Yuri Roll Machine Co., Ltd.).
Probe tack: as measured with a probe tack tester (made by Nichiban Co., Ltd.) under conditions of: measurement temperature = 23 °C; relative humidity = 60 %; contact period = 1 second; peeling rate = 1 cm/second.
180°-peel strength: as measured by a process including the steps of: attaching the sample of 25 mm in width onto a stainless steel material (adherend); and then pressing the sample by once running a 2-kg-heavy roller thereon back and forth; and, 20 minutes later, peeling off the sample from the stainless steel material at an angle of 180° and a tensile rate of 300 mm/minute under conditions of: measurement temperature = 23 °C; relative humidity = 60 %.
Holding power: as determined by a process including the steps of: attaching the sample onto a stainless steel sheet such that the adhesion area would be a predetermined value (1.27 cm × 1.27 cm); and then pressing the sample onto the stainless steel sheet by once running a 2-kg-heavy roller thereon back and forth; and then adjusting the temperature of the product to a predetermined temperature (60 °C) for 30 minutes; and then applying a load of 1 kg to the sample; and then measuring how long the sample has not fallen off from the stainless steel sheet since the application of the load, or measuring to what degree (unit: mm) the position of the attached sample on the stainless steel sheet has varied in 24 hours after the application of the load in the case where the sample has not fallen off from the stainless steel sheet even if 24 hours have passed since the application of the load.

### -EXAMPLE 1-

This is an example in which: a polymer solution, resultant from the first radical polymerization step, and a polymerizable monomer, which was to be used in the second radical polymerization step, were mixed all together at once, and the polyfunctional monomer was used both in the first and second radical polymerization steps.

### First radical polymerization step:

First, 177.3 g of methyl methacrylate, 1.8 g of acrylic acid (both as first (polymerizable) monomers), 0.9 g of tetraethylene glycol diacrylate (as polyfunctional monomer) (made by Shin-Nakamura Chemical Industrial Co., Ltd.; hereinafter abbreviated as TEGDA), and 140 g of ethyl acetate (as solvent) were placed into a four-necked flask of 2 liters as equipped with a stirrer, a nitrogen-introducing tube, dropping funnels, a thermometer, and a condenser, and the internal temperature of the flask was then elevated to 85 °C under nitrogen atmosphere. Then, after the internal temperature had reached 85 °C, 3 g of pentaerythritol tetrakisthioglycolate (as polyvalent mercaptan), 0.6 g of 2,2'-azobis(2-methylbutyronitrile) (as radical polymerization initiator) (trade name: ABN-E, made by Japan Hydrazine Co., Inc.; hereinafter abbreviated as ABN-E), and 20 g of ethyl acetate (as solvent) were added to initiate polymerization.

At each of 50 minutes and 80 minutes later than the initiation of the polymerization, 1.5 g of pentaerythritol tetrakisthioglycolate (as polyvalent mercaptan), 0.3 g of ABN-E (as radical polymerization initiator), and 10 g of ethyl acetate (as solvent) were added.

One hundred and forty minutes later, when the conversion of methyl methacrylate had reached 84.9 %, methoxyphenol (as polymerization inhibitor) was added in an amount of 0.018 g (100 weight ppm), and cooling was carried out, thus completing the first radical polymerization step.

### Second radical polymerization step:

Next, 415. 8 g of butyl acrylate, 4.2 g of acrylic acid (both as second (polymerizable) monomers), 0.9 g of TEGDA (as polyfunctional monomer), and 0.6 g of ABN-E (as radical polymerization initiator) were added to a polymer solution, resultant from the first radical polymerization step, to prepare a mixed solution.

Next, 400 g of ethyl acetate (as solvent) was placed into another flask and then heated to 80 °C so as to be refluxed. Then, a portion (30 weight %) of the mixed solution as obtained above was added into this ethyl acetate under reflux to initiate the second radical polymerization reaction.

After 10 minutes from the initiation of the reaction, the rest of the mixed solution was dropwise added over a 2-hour period.

At each of 30 minutes and 60 minutes later than the completion of the dropwise addition, 0.2 g of ABN-E (as radical polymerization initiator) and 5 g of ethyl acetate (as solvent) were added. The reaction solution was reacted under reflux for another 2 hours to end the polymerization.

### Post-treatment step:

Volatile components, such as ethyl acetate (solvent) and residual monomers, were removed from the resultant reaction solution with a twin-screw extruder, thus obtaining a colorless transparent star-shaped block copolymer as an acrylic block copolymer.

### Measurement:

The resultant star-shaped block copolymer had a number-average molecular weight (Mn) of 31,000 and a weight-average molecular weight (Mw) of 241,000. This star-shaped block copolymer itself was regarded as a hot-melt pressure sensitive adhesive. The pressure sensitive adhesive properties thereof are shown in Table 1.

### -EXAMPLE 2-

This is an example in which: a polymer solution, resultant from the first radical polymerization step, and a polymerizable monomer, which was to be used in the second radical polymerization step, were mixed all together at once, and the polyfunctional monomer was used only in the second radical polymerization step.

A star-shaped block copolymer was obtained as an acrylic block copolymer in the same way as of Example 1 except that the TEGDA (as polyfunctional monomer) was not used in the first radical polymerization step.

The pressure sensitive adhesive properties of this star-shaped block copolymer are shown in Table 1.

### -EXAMPLE 3-

This is an example in which: a polymer solution, resultant from the first radical polymerization step, and a polymerizable monomer, which was to be used in the second radical polymerization step, were dropwise added separately from each other to mix them together, and the polyfunctional monomer was used both in the first and second radical polymerization steps.

The polymer solution, resultant from the same first radical polymerization step as of Example 1, was subjected to the second radical polymerization step as follows:

First, 415. 8 g of butyl acrylate, 4.2 g of acrylic acid (both as second (polymerizable) monomers), 0.9 g of TEGDA (as polyfunctional monomer), and 0.6 g of ABN-E (as radical polymerization initiator) were mixed to prepare a polymerizable monomer solution which was to be used in the second radical polymerization step.

Next, 400 g of ethyl acetate (as solvent) was placed into another flask and then heated to 80 °C so as to be refluxed. Then, a portion (30 weight %) of the above polymer solution, resultant from the first radical polymerization step, and a portion (30 weight %) of the polymerizable monomer solution, as prepared above, were added separately from each other into this ethyl acetate under reflux to initiate the second radical polymerization reaction. After 10 minutes from the initiation of the reaction, the rest of the above polymer solution and the rest of the above polymerizable monomer solution were dropwise added separately from each other over a 2-hour period.

At each of 30 minutes and 60 minutes later than the completion of the dropwise addition, 0.2 g of ABN-E (as radical polymerization initiator) and 5 g of ethyl acetate (as solvent) were added. The reaction solution was reacted under reflux for another 2 hours to end the second radical polymerization step.

Thereafter, the procedure was carried out in the same way as of Example 1, thus obtaining a star-shaped block copolymer as an acrylic block copolymer.

The pressure sensitive adhesive properties of this star-shaped block copolymer are shown in Table 1.

### -COMPARATIVE EXAMPLE 1-

This is an example of JP-A-10-287721 in which: the polyfunctional monomer was used only in the first radical polymerization step, and a polymerizable monomer, which was to be used in the second radical polymerization step, was dropwise added to a polymer solution resultant from the first radical polymerization step.

The second radical polymerization step was initiated subsequently to the attainment of the conversion of methyl methacrylate to 84.9 % in the first radical polymerization step of Example 1. First, 415.8 g of butyl acrylate, 4.2 g of acrylic acid (both as second (polymerizable) monomers), and 400 g of ethyl acetate (as solvent) were dropwise added from the dropping funnels to the resultant reaction solution over a 2-hour period.

At each of 30 minutes and 60 minutes later than the completion of the dropwise addition, 0.2 g of ABN-E (as radical polymerization initiator) and 5 g of ethyl acetate (as solvent) were added. Another 60 minutes later, 0.6 g of azobisisobutyronitrile (as radical polymerization initiator) (trade name: ABN-R, made by Japan Hydrazine Co., Inc.) and 10 g of ethyl acetate (as solvent) were added. The reaction solution was reacted under reflux for another 2 hours and then cooled down to room temperature to complete the polymerization reaction.

Volatile components, such as ethyl acetate (solvent) and residual monomers, were removed from the resultant reaction solution with a twin-screw extruder, thus obtaining a colorless transparent star-shaped block copolymer. The resultant copolymer had a number-average molecular weight (Mn) of 29,500 and a weight-average molecular weight (Mw) of 156,000. This star-shaped block copolymer itself was regarded as a hot-melt pressure sensitive adhesive. The pressure sensitive adhesive properties thereof are shown in Table 1.

### -COMPARATIVE EXAMPLE 2-

This is an example of JP-A-10-287721 in which: the polyfunctional monomer was used only in the second radical polymerization step, and a polymerizable monomer, which was to be used in the second radical polymerization step, was dropwise added to a polymer solution resultant from the first radical polymerization step.

A star-shaped block copolymer was obtained in the same way as of Comparative Example 1 except that the types of the first and second (polymerizable) monomers, the amount of the polyvalent mercaptan, the type and amount of the polyfunctional monomer, and the step involving the use of the polyfunctional monomer were changed to those of Table 1, which further shows the results of the properties of the resultant copolymer as measured in the same way as above.

**Table 1**

| | | | Example | | | Comparative Example | |
|---|---|---|---|---|---|---|---|
| | | | 1 | 2 | 3 | 1 | 2 |
| Composition of polymer | First monomer | Methyl methacrylate | 177.3 | 177.3 | 177.3 | 177.3 | 177.3 |
| | | Acrylic acid | 1.8 | 1.8 | 1.8 | 1.8 | 1.8 |
| | Second monomer | Ethyl acrylate | --- | --- | --- | --- | --- |
| | | Butyl acrylate | 415.8 | 415.8 | 415.8 | 415.8 | 415.8 |
| | | 2-Ethylhexyl acrylate | --- | --- | --- | --- | --- |
| | | Acrylic acid | 4.2 | 4.2 | 4.2 | 4.2 | 4.2 |
| | Polyvalent mercaptan (parts) | | 6 | 6 | 6 | 6 | 8 |
| | Polyfunctional monomer (parts) | | TEGDA¹⁾ 0.9 + 0.9 | TEGDA¹⁾ 0.9 | TEGDA¹⁾ 0.9 + 0.9 | TEGDA¹⁾ 0.9 | TEGDA¹⁾ 0.9 |
| | Step(s) in which polyfunctional monomer is used | | First step and second step | Second step | First step and second step | First step | Second step |
| | Polyfunctional monomer /all monomers (wt) | | 0.003 | 0.0015 | 0.003 | 0.0015 | 0.0015 |
| | Polyfunctional monomer /polyvalent mercaptan (wt) | | 0.3 | 0.15 | 0.3 | 0.15 | 0.15 |
| Properties of polymer | Number-average molecular weight (Mn) | | 31,000 | 26,700 | 29,800 | 29,500 | 28,600 |
| | Weight-average molecular weight (Mw) | | 241,000 | 216,000 | 239,000 | 156,000 | 269,000 |
| | Probe tack (gf) | | 610 | 650 | 630 | 700 | 770 |
| | 180°-peel strength (g/25 mm) | | 730 | 790 | 750 | 820 | 790 |
| | Holding power²⁾ (mm, minutes) | | (0.1 mm) over 1440 minutes | 420 minutes | (0.2 mm) over 1440 minutes | 12 minutes | 10 minutes |
| | Viscosity (cps) at 180 °C | | 45,700 | 33,400 | 39,800 | 30,500 | 27,500 |

| | | | | | | | |
|---|---|---|---|---|---|---|---|
| 1) Tetraethylene glycol diacrylate (made by Shin-Nakamura Chemical Industrial Co., Ltd.) | | | | | | | |
| 2) The numerical values in the parentheses show to what degree the samples slipped in 24 hours, and the other cases show when the samples fell off. | | | | | | | |

Both in Comparative Examples 1 and 2, the star-shaped block copolymers were obtained by the multistep radical polymerization involving the use of the polyvalent mercaptan. Comparative Examples 1 and 2 are only different from Examples 1 to 3 in that the uniform mixing of the polymer solution, resultant from the first radical polymerization step, with the polymerizable monomer, which is to be used in the second radical polymerization step, is not carried out in the second radical polymerization step in Comparative Examples 1 and 2.

From the comparison of Example 1 with Comparative Example 1 and the comparison of Example 2 with Comparative Example 2, it would be well understood that if the adhesion area is set to 1.27 cm × 1.27 cm, falling-off occurs after about 10 minutes in the Comparative Examples, whereas the star-shaped block copolymers which are acrylic block copolymers according to the present invention exhibit high holding power without causing the falling-off even after 420 to 1,440 minutes.

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

## Claims

1. An acrylic block copolymer, which comprises a (meth)acrylic ester structural unit as an essential component in a ratio of 50 to 100 weight % of the entirety of the acrylic block copolymer and has a holding power of not less than 100 minutes,
wherein the holding power is determined by a process including the steps of: preparing a sample by melt-coating a hot-melt pressure sensitive adhesive in a thickness of 25 µm onto a 38-µm-thick PET film, wherein the hot-melt pressure sensitive adhesive includes the acrylic block copolymer; and then attaching the sample onto a stainless steel sheet such that the adhesion area would be 1.27 cm × 1.27 cm; and then pressing the sample onto the stainless steel sheet by once running a 2-kg-heavy roller thereon back and forth; and then adjusting the temperature of the product to 60 °C for 30 minutes; and then applying a load of 1 kg to the sample; and then measuring how long the sample has not fallen off from the stainless steel sheet since the application of the load.

2. An acrylic block copolymer according to claim 1, which is a star-shaped block copolymer comprising a plurality of star-shaped structures in which at least three chain polymer segments are radially extended from a central polyvalent mercaptan segment, wherein the plurality of star-shaped structures are bonded to each other at their chain polymer segments, and wherein the central polyvalent mercaptan segment is a residual portion resultant from dissociation of protons from mercapto groups of a polyvalent mercaptan.

3. An acrylic block copolymer according to claim 1 or 2, wherein the holding power is not less than 1,000 minutes.

4. A hot-melt pressure sensitive adhesive, which comprises an acrylic block copolymer as an essential component, wherein the acrylic block copolymer includes a (meth)acrylic ester structural unit as an essential component in a ratio of 50 to 100 weight % of the entirety of the acrylic block copolymer and has a holding power of not less than 100 minutes,
wherein the holding power is determined by a process including the steps of: preparing a sample by melt-coating a hot-melt pressure sensitive adhesive in a thickness of 25 µm onto a 38-µm-thick PET film, wherein the hot-melt pressure sensitive adhesive includes the acrylic block copolymer; and then attaching the sample onto a stainless steel sheet such that the adhesion area would be 1.27 cm × 1.27 cm; and then pressing the sample onto the stainless steel sheet by once running a 2-kg-heavy roller thereon back and forth; and then adjusting the temperature of the product to 60 °C for 30 minutes; and then applying a load of 1 kg to the sample; and then measuring how long the sample has not fallen off from the stainless steel sheet since the application of the load.

5. A production process for an acrylic block copolymer, which comprises the multistep radical polymerization in the presence of a polyvalent mercaptan wherein the elementary steps of the multistep radical polymerization differ in polymerizable monomers as used therein, wherein at least one of the elementary steps of the multistep radical polymerization involves the joint use of a polyfunctional monomer with the polymerizable monomer, wherein the second radical polymerization step among the elementary steps of the multistep radical polymerization includes the steps of: all at once mixing a polymer solution, resultant from the first radical polymerization step, with a polymerizable monomer which is to be used in the second radical polymerization step; and then polymerizing the resultant mixture in the presence of the polyfunctional monomer.

6. A production process for an acrylic block copolymer, which comprises the multistep radical polymerization in the presence of a polyvalent mercaptan wherein the elementary steps of the multistep radical polymerization differ in polymerizable monomers as used therein, wherein at least one of the elementary steps of the multistep radical polymerization involves the joint use of a polyfunctional monomer with the polymerizable monomer, wherein the second radical polymerization step among the elementary steps of the multistep radical polymerization includes the step of gradually adding a polymer solution, resultant from the first radical polymerization step, and a polymerizable monomer, which is to be used in the second radical polymerization step, to a vessel to mix them, while polymerizing the resultant mixture in the presence of the polyfunctional monomer.

7. A production process according to claim 5 or 6, wherein the weight ratio of the polyfunctional monomer to the polyvalent mercaptan (weight of polyfunctional monomer/weight of polyvalent mercaptan) is less than 2.

8. A production process according to any one of claims 5 to 7, wherein the weight ratio of the polyfunctional monomer to the total of the polymerizable monomers (weight of polyfunctional monomer/total weight of polymerizable monomers) is less than 0.05.
